# EUROPÄISCHE PATENTANMELDUNG

(11) **EP 4 520 149 A1**
(43) Veröffentlichungstag der Anmeldung: **12.03.2025**
(21) Anmeldenummer: 24195869.3
(22) Anmeldetag: 22.08.2024
(51) Int. Cl.: A01B 29/04, A01B 29/06, A01B 49/02

(54) **WALZENANORDNUNG**

(30) Priorität: 23.08.2023 DE 102023122589
(71) Anmelder: Lemken GmbH & Co KG, 46519 Alpen (DE)
(72) Erfinder: Shalin, Vladimir, 46240 Bottrop (DE); Buddendick, Christian, 48465 Schüttorf (DE)

(57) **Zusammenfassung**

Es wird eine Walzenanordnung (2) für eine landwirtschaftliche Maschine (1), insbesondere für ein Bodenbearbeitungsgerät vorgeschlagen, wobei die landwirtschaftliche Maschine (1) einen Rahmen (3) aufweist, an welchem die Walzenanordnung (2) angeordnet ist und die Walzenanordnung (2) einen Walzenkörper (4) sowie einen ersten und einen zweiten Lagerarm (5, 6) aufweist, wobei die jeweiligen Lagerarme (5, 6) verformbar ausgebildet sind und mit einem ersten Ende des Lagerarms (5, 6) endseitig des Walzenkörpers (4) und mit dem zweiten Ende am Rahmen (3) angeordnet sind, wobei zwischen dem jeweiligen Lagerarm (5, 6) und dem Walzenkörper (4) eine Drehlagerung (7) angeordnet ist.

Durch diese Anordnung kann eine individuelle Bodenanpassung des Walzenkörpers an Bodenunebenheiten und Hindernisse erfolgen.

## Beschreibung

Die Erfindung betrifft eine Walzenanordnung für eine landwirtschaftliche Maschine gemäß dem Oberbegriff des Patentanspruches 1.

Aus dem Stand der Technik sind Bodenbearbeitungsgeräte mit rotierend gelagerten Walzen bekannt. DE9210389U1 beschreibt ein solches Bodenbearbeitungsgerät, an dem eine Walze höhenbeweglich mittels eines Hilfslagerrahmens am Rahmen des Bodenbearbeitungsgerätes angeordnet ist. Mittels einer gefederten Abstützung des Hilfslagerrahmens kann die Walze in ihrer vertikalen Position relativ zum Rahmen eingestellt werden.

Ein ähnliches Bodenbearbeitungsgerät des gleichen Anmelders wird in EP280048A1 gezeigt. Mittels einer vorspannbaren Druckfederstütze kann die Walze und ein dazugehöriges Einebnungselement beispielsweise über Strohhaufen hinweg rollen, ohne das gesamte Bodenbearbeitungsgerät auszuheben.

Allerdings tritt bei einem einseitig aus dem Boden hervorstehenden Hindernis eine extreme Lagerbelastung zwischen Walze und Hilfslagerrahmen auf, welche zum vorzeitigen Verschleiß oder Bruch des Lagers führt. Weiterhin findet keine Anpassung an Bodenunebenheiten quer zur Arbeitsrichtung des Bodenbearbeitungsgerätes statt.

Aufgabe der Erfindung ist es, obige Nachteile zu beheben und eine Queranpassung einer Walzenanordnung an Bodenunebenheiten zu ermöglichen. Zugleich soll der Anpressdruck der Walzenanordnung auf die Bodenoberfläche beibehalten werden.

Diese Aufgabe wird durch die Merkmale des kennzeichnenden Teiles des Anspruches 1 gelöst. Die weiteren Ansprüche enthalten vorteilhafte Ausführungsformen der Erfindung.

Eine Walzenanordnung für eine landwirtschaftliche Maschine, insbesondere für ein Bodenbearbeitungsgerät, weist einen Rahmen auf, an welchem eine

Walzenanordnung angeordnet ist. Die Walzenanordnung weist einen Walzenkörper sowie einen ersten und einen zweiten Lagerarm auf. Die jeweiligen Lagerarme sind verformbar ausgebildet und mit einem ersten Ende des Lagerarms endseitig des Walzenkörpers und mit dem zweiten Ende am Rahmen angeordnet. Dabei ist zwischen dem jeweiligen Lagerarm und dem Walzenkörper eine Drehlagerung angeordnet. Durch die Anordnung der Drehlagerung sowie der Verformbarkeit der einzelnen Lagerarme wird eine Bodenanpassung des Walzenkörpers auch in kupiertem oder unebenem Gelände erreicht, während die landwirtschaftliche Maschine in seiner größeren Arbeitsbreite auf dem Boden aufsteht.

Weiterhin weist die Drehlagerung zumindest eine Lagerachse und einen Lagerkörper auf. Dabei ist die Lagerachse dem verformbaren Lagerarm und der Lagerkörper dem Walzenkörper zugeordnet. Üblich aus dem Stand der Technik ist die umgekehrte Anordnung. Durch Zuordnung der Lagerachse zum Lagerarm kann dieser kompakt und bauraumsparend ausgeführt werden. Vorzugsweise weist der Lagerarm zur Aufnahme der Lagerachse lediglich einen Durchbruch auf. Der Durchbruch kann vorzugsweise als Klemmvorrichtung, welche den Körper der Lagerachse radial klemmend umschließt, ausgeführt werden. Ebenfalls ist eine axiale Klemmung mit Spannmitteln, vorzugsweise mit lösbaren Innen- und Außengewinden möglich. Die vorgeschlagenen Klemmvorrichtungen zwischen Lagerarm und Lagerachse sind weiter bevorzugt formschlüssig verdrehgesichert. Eine Verdrehsicherung wird beispielsweise dadurch erreicht, in dem der Durchbruch im Lagerarm sowie der damit korrespondierende Aufnahmeabschnitt der Lagerache als von der Kreisform abweichend ausgebildet ist. Dies wird beispielsweise durch eine Vieleckform, eine Oval-Form, eine Verzahnung, eine Nut-Federverbindung oder ein Fasenkontour erreicht.

Zudem können die verformbaren Lagerarme der Walzenanordnung aus einem elastischen Federmaterial, vorzugsweise als Blatt- oder Stabfeder, ausgebildet sein. Für das Federmaterial wird vorzugsweise ein warmbehandelter, dauerelastischer Federstahl verwendet. Hierdurch wird eine Torsions- und / oder Biegefederwirkung des einzelnen Lagerarmes erzielt. Dabei ist am unteren Ende des Lagerarmes, also in der Nähe der Drehlagerung, eine Torsionsfederwirkung bevorzugt, um einen Winkelausgleich des Walzenkörpers bei Bodenunebenheiten oder Hinderniskontakt relativ zum Rahmen der landwirtschaftlichen Maschine zu ermöglichen. Im oberen Bereich des Lagerarmes, also an dessen Befestigung zum Rahmen ist eine Biegefederung beabsichtigt, damit sich der Lagerarm entlang seiner Erstreckung relativ zur Bodenoberfläche gemeinsam mit dem zugehörigen Ende des Walzenkörpers relativ zur Bodenoberfläche auf und ab bewegen bzw. einfedern kann. Dies wird bevorzugt durch die Wahl einer Blattfeder mit flachem Querschnitt erzielt. Diese ist mit Ihrer breiten Seite im Bereich des Rahmens vorzugsweise rund- oder S-förmig gebogen und weist weiter bevorzugt Ausnehmungen oder Befestigungspunkte zur Anbringung am Rahmen oder einer Hilfsvorrichtung auf. Abwärts am unteren Bereich des Lagerarmes weist dieser ein um vorzugsweise 90 Grad gewendeltes Ende auf, welches der Aufnahme der Drehlagerung als Befestigungsfläche dient.

Im Falle einer Stabfeder kann diese im oberen Bereich als gebogener oder spiralförmiger Biegebereich ausgebildet sein, um ein Auf- und Abfedern des Lagerarmes in seinem unteren Bereich zu ermöglichen. Alternativ oder zusätzlich kann das obere Ende der Stabfeder als entlang der Quererstreckung des Rahmens verlaufende Torsionsfeder verlängert werden. Das Biegemoment des quer verlaufenden Torsionsabschnittes kann ebenfalls zur Auf- und Abfederung des Lagerarmes in seinem unteren Bereich genutzt werden.

Für eine verbesserte Bauraumverfügbarkeit und eine gezielte partielle Torsions- oder Biegewirkung des Lagerarmes kann dessen Querschnitt variabel in Breite und Dicke ausgeführt werden. Weiterhin kann die Länge des Lagerarmes passend zur gewählten Torsions- und Biegewirkung gewählt sowie an den effektiven bzw. umlaufenden Durchmesser des Walzenkörpers angepasst werden.

Weiter bevorzugt weist der Walzenkörper und/oder der Lagerkörper eine Befestigungsvorrichtung auf, mit welcher der Walzenkörper und der Lagerkörper einander zugeordnet sind. Dabei ist die Befestigungsvorrichtung verformbar ausgebildet. Hierdurch können auftretende Verwindungs- oder Kippkräfte, welche durch die Verformung des Lagerarmes bei Bodenunebenheiten auftreten, zwischen Lagerkörper und Walzenkörper aufgenommen werden. Vorzugsweise ist der Lagerkörper als Flanschlager ausgebildet, welcher an einem Flanschsteg des Walzenkörpers befestigt ist. Teile des Lagerkörpers, der Flanschsteg selbst als auch Zwischenelemente bilden einzeln oder in Kombination die verformbare Befestigungsvorrichtung. Diese weist weiter bevorzugt ein elastisches Verformverhalten in axial translatorisch oder im Winkel zur Achse des Walzenkörpers auf, beispielsweise durch Einsatz von Gummi- oder Elastomermaterialien.

In einer weiteren Erfindungsform der Walzenanordnung sind der erste verformbare Lagerarm und der zweite verformbare Lagerarm unabhängig voneinander oder relativ zueinander verformbar ausgebildet. In dieser Anordnung bildet der Walzenkörper mittels der Lagerkörper die einzige Verbindung zwischen den unteren Enden der Lagerarme im Arbeitsbereich des Walzenkörpers. Bis auf die Aufnahme der Lagerarme am oberen Ende des Rahmens der landwirtschaftlichen Maschine sind keine weiteren Verbindungen zwischen den Lagerarmen erforderlich, was die Verformung der Lagerarme zueinander ermöglicht. Neben einer verbesserten Bodenanpassung des Walzenkörpers werden Verstopfungen vermieden, welche durch von dem Walzenkörper aufgeworfenes Bodenmaterial oder Pflanzenreste auftreten.

In einer verbesserten Erfindungsform ist zwischen dem Rahmen der landwirtschaftlichen Maschine und den verformbaren Lagerarmen eine Stelleinrichtung angeordnet ist, durch welche die Position des Walzenkörpers oder der verformbaren Arme oder deren Verformung einstellbar ausgebildet ist. Hiermit kann die Tiefenwirkung oder die Anpresskraft des Walzenkörpers auf die Bodenoberfläche entsprechend Ihrer Beschaffenheit vorteilhaft angepasst werden.

Weiterhin sind der Stelleinrichtung zumindest zwei, vorzugsweise vier oder mehr verformbare Lagerarme jeweils paarweise mit einem Walzenkörper verbunden. Durch diese Form der Stelleinrichtung ist eine gemeinsame Einstellung mehrerer Walzenkörper an die Bodenbeschaffenheit möglich, während ein individueller Ausgleich der einzelnen Walzenkörper an Bodenunebenheiten durch die verformbaren Lagerarme gewährleistet ist.

Vorzugsweise ist die Stelleinrichtung mittels zumindest eines Aktors fernverstellbar oder in der Stellwirkung regelbar ausgebildet ist. Der Aktor kann elektrisch, pneumatisch oder hydraulisch, beispielsweise als Stellzylinder oder Stellmotor zwischen dem Rahmen der landwirtschaftlichen Maschine und der Stelleinrichtung angeordnet sein. Eine Energieversorgung für den Aktor wird bevorzugt von einem Traktor bereitgestellt, welcher die landwirtschaftliche Maschine in Arbeitsrichtung über die Bodenoberfläche bewegt. Von diesem Traktor kann ein Bediener den Aktor mittels eines Schalters oder Steuerventiles situationsbedingt bedienen und einstellen. Weiterhin kann die Einstellung durch eine Steuer- und Regelvorrichtung automatisch erfolgen. Die Steuer- und Regelvorrichtung erfasst dabei Betriebsparameter der Walzenanordnung und betätigt die Stelleinrichtung mittels des Aktors entsprechend. Betriebsparameter können die Arbeitsgeschwindigkeit der landwirtschaftlichen Maschine in Arbeitsrichtung, die Drehzahl oder Umlaufgeschwindigkeit eines oder mehrerer Walzenkörper, deren Schlupf oder Störereignisse wie auftretende oder sich anbahnende Blockaden oder Verstopfungen, sensorisch oder optisch erfasste Boden- oder Pflanzenbeschaffenheiten vor oder hinter der Walzenanordnung sein.

Weiterhin sind geplante Andruck- oder Tiefenwerte in die Steuerungs- und Regeleinheit hinterlegbar, mit welchen die Walzenanordnung im Arbeitsbetrieb initial angefahren oder geregelt wird.

In einer weiteren Erfindungsform ist der Walzenkörper als umlaufende, mit quer zur Arbeitsrichtung der landwirtschaftlichen Maschine angeordneten, umlaufenden Verdichtungs- oder Messerleisten ausgebildet. Um einen Bodenantrieb des Walzenkörpers zu gewährleisten, ist dieser mit mindestens drei im gleichen Winkel oder Abstand auf der Umlaufbahn des Walzenkörpers angeordnet. Zugleich soll die Anzahl zwölf umlaufende, durchgehende Messerleisten nicht überschreiten, um Ansammlung von Boden- oder Pflanzenmaterial in den Zwischenräumen der Messerleisten oder im Inneren des Walzenkörpers zu vermeiden. Die Messerleisten können gerade und parallel zur axialen Erstreckung des Walzenkörpers oder gewendelt um diese herum angeordnet werden. In der geraden Anordnung erhöht sich die Schneidwirkung, da die Umlaufkontur der Messerleisten einem Vieleck gleicht und das Auftreffen der Messerwalzen auf die Bodenoberfläche intermittierend und somit schlagend erfolgt. Im Falle der gewendelten Anordnung der Messerleisten verbessert sich der Bodenantrieb des Walzenkörpers, da stets zwei oder mehr Messerleisten zumindest abschnittsweise zugleich Bodenkontakt aufweisen. Die Wendelung der Messerwalzen umfasst zumindest einen halben Messerabstand entlang der Umlaufbahn des Walzenkörpers, somit zumindest einen halben Teilungsabstand oder halben Teilungswinkel, um den überschneidenden Bodenkontakt zumindest zweier Messerleisten eines Walzenkörpers weitgehend zu gewährleisten. Bevorzugt hat sich ein halber bis anderthalbfacher Messerabstand als sehr geeignet herausgestellt, weiter bevorzugt das 0,7- bis 1,3- fache eines Messerabstandes.

In einer bevorzugten Walzenanordnung sind der Walzenanordnung an der landwirtschaftlichen Maschine weitere Bodenbearbeitungs- oder Verteilwerkzeuge vor- oder nachgelagert zugeordnet. Insbesondere in Falle einer Walzenanordnung mit quer zur Arbeitsrichtung angeordneten, umlaufenden Schneidmessern kann mit weiteren Schneidwerkzeugen, welche eher längs zur Arbeitsrichtung wirken, eine Art Kreuzschnitt der Schneidwerkzeuge erzielt werden. Die weiteren Schneidwerkzeuge der landwirtschaftlichen Maschine können starr oder beweglich, insbesondere ebenfalls rotierend angeordnet sein.

Weiterhin können auch mehrere Walzenanordnungen in Arbeitsrichtung der landwirtschaftlichen Maschine hintereinander angeordnet sein, um die Wirkungsintensität der einzelnen Walzenanordnungen zu erhöhen. Dabei sind die hintereinander angeordneten Walzenanordnungen bevorzugt auch seitlich zueinander versetzt, um axiale Zwischenräume zwischen den benachbarten Walzenkörpern zu kompensieren. Der seitliche Versatz der Walzenanordnungen zueinander beträgt dabei zumindest den lichten Abstand zweier nebeneinander oder axial benachbarter Walzenkörper.

Die Bodenbearbeitungs- oder Verteilwerkzeuge können alternativ zu obigen Schneidwerkzeugen auch als Nivellier-, Striegel, Krümel- oder Einbringwerkzeuge ausgebildet sein. Letztere ermöglichen die gleichzeitige Ausbringung von Saatgut oder Dünger oder weiterer Materialien und Hilfsstoffe in fester oder flüssiger Form in die Bodenoberfläche.

Die Erfindung zeichnet sich insbesondere dadurch aus, dass durch Einsatz verformbarer, vorzugsweise elastischer Lagerarme an einer Walzenanordnung einer landwirtschaftlichen Maschine eine individuelle Bodenanpassung der Walzenanordnung je Lagerarm an Bodenunebenheiten oder auftretende Hindernisse oder aus Problemen mit Verstopfungen durch Boden- und Pflanzenmaterial ermöglicht wird. Insbesondere mit elastisch verformbaren Lagerarmen wird zugleich eine variable Bodendruckanpassung der Walzenkörper erzielt.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 eine landwirtschaftliche Maschine, hier ein Bodenbearbeitungsgerät in perspektivischer Darstellung,
Fig.2 die Walzenanordnung als Perspektive sowie
Fig.3 die Drehlagerung der Walzenanordnung als vereinfachte Schnittansicht.

Bei den Darstellungen handelt es sich im Wesentlichen um konkrete Ausführungsbeispiele. Die Erfindung ist hingegen nicht auf die dargestellten Ausführungsbeispiele beschränkt, sondern kann auch in fachmännischer Weise abgewandelt werden, um sie an einen bestimmten Anwendungsfall anzupassen.

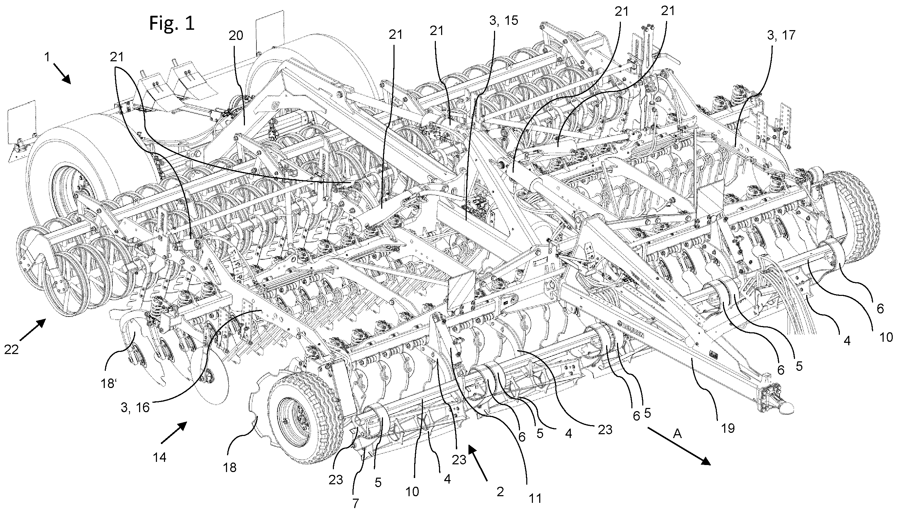

Die in Figur 1 gezeigte, landwirtschaftliche Maschine 1 zeigt beispielhaft ein als Kurzscheibenegge ausgebildetes Bodenbearbeitungsgerät. Diese weist einen Rahmen 3 auf, welcher aus einem Mittelteil 15 sowie einem rechten und linken Seitenflügel 16, 17 besteht, welche schwenkbar mit dem Mittelteil verbunden sind und durch Aktoren 21 von der dargestellten Arbeitsposition in eine aufrechte Transportstellung verbracht werden können. Am vorderen Ende des Mittelteils 15 ist eine Deichsel 19 zur Anhängung der landwirtschaftlichen Maschine 1 an einen nicht dargestellten Traktor vorgesehen, welcher zugleich zur Energieversorgung der Aktoren 11, 21 sowie weiterer Einrichtungen der landwirtschaftlichen Maschine 1 dient. Im hinteren Bereich ist ein Fahrwerk 20 am Mittelteil 15 des Rahmens 3 angeordnet. Sowohl das Fahrwerk 20 als auch optional die Deichsel 19 können relativ zum Mittelteil 15 des Rahmens 3 über einen jeweiligen Aktor 21 verschwenkt und somit die landwirtschaftliche Maschine in die dargestellte Arbeitsposition abgesenkt oder für eine Transport- oder Wendefahrt ausgehoben werden. Der Rahmen 3 kann auch einteilig oder über die Seitenflügel 16, 17 hinaus mit weiteren Rahmensegmenten ausgebildet sein. Anstelle des Fahrwerkes 19 und 20 kann die landwirtschaftliche Maschine 1 mittels eines nicht dargestellten Anbauturms am Rahmen 3 über die Dreipunkthydraulik des Traktors aufgenommen, bewegt und ausgehoben werden.

An den jeweiligen Seitenflügeln 16, 17 des Rahmens 3 sowie optional auch am Mittelteil 15 sind Bodenbearbeitungs- oder Verteilwerkzeuge 14 in einer oder bevorzugt mehreren Reihen hinter- und nebeneinander angeordnet und bilden die sich seitlich bzw. quer zur Fahrt- oder Arbeitsrichtung A erstreckende Arbeitsbreite der landwirtschaftlichen Maschine 1. Im vorliegenden Ausführungsbeispiel sind in Arbeitsrichtung der landwirtschaftlichen Maschine 1 zwei Reihen von Schneidscheiben 18. 18' hintereinander angeordnet und nebeneinander beabstandet an den jeweiligen Seitenflügeln 16, 17 und/oder am Mittelteil 15 befestigt. Dabei weisen die Schneidscheiben 18 der ersten Scheibenreihe eine entgegengesetzte Orientierung zu den Schneidscheiben 18' der zweiten Schneidscheibenreihe auf. Bevorzugt sind über die Breite der landwirtschaftlichen Maschine 1 die Orientierungen der Schneidscheiben 18, 18` spiegelbildlich angeordnet. D.h. die vorderen Schneidscheiben 18 fördern Boden- und Pflanzenmaterial nach außen, die hinteren Schneidscheiben 18' nach innen. Hierdurch wird ein Seitenzugeffekt vermieden, welcher sich bereits bei geringfügigen unterschiedlichen Arbeitstiefen der Schneidscheiben 18, 18' zueinander ergibt.

Rückseits der beiden Seitenflügel 16, 17 sind bevorzugt als Walzen ausgebildete Rückverfestigungswerkzeuge 22 schwenkbar angeordnet. Mittels Anschläge oder den dargestellten Aktoren 21 können die Rückverfestigungswerkzeuge 22 in der Höhe relativ zu den Seitenflügeln eingestellt werden und geben somit die Arbeitstiefe der Bodenbearbeitungs- oder Verteilwerkzeuge 14 vor.

Im vorderen Bereich der Seitenflügel 16, 17 des Rahmens 3 ragen mehrere Tragarme 23 vor, an welchen jeweils eine oder mehrere Walzenanordnungen 2 mittels der Stelleinrichtung 10 schwenkbar angeordnet sind. Die Schwenkbewegung der Stelleinrichtung 10 kann durch Anschläge oder Spindeln begrenzt oder eingestellt werden oder, wie dargestellt, durch einen oder mehrere Aktoren 11 stufenlos betätigt werden. Alternativ oder zusätzlich kann die Stelleinrichtung auch translatorisch oder mittels Viergelenk-Anordnungen oder ähnlicher Bewegungsgetriebe in mehreren Richtungen eingestellt werden.

An einer Stelleinrichtung sind zumindest eine, oder wie bevorzugt dargestellt zwei oder mehr Walzenanordnungen befestigt sind. Die Walzenanordnungen 2 bestehen zumindest aus zwei von der Stelleinrichtung 10 abstehenden und daran befestigten, verformbaren Lagerarmen 5, 6, an deren freien, abstehenden Enden jeweils eine Drehlagerung zur Aufnahme eines Walzenkörpers 4 angeordnet sind.

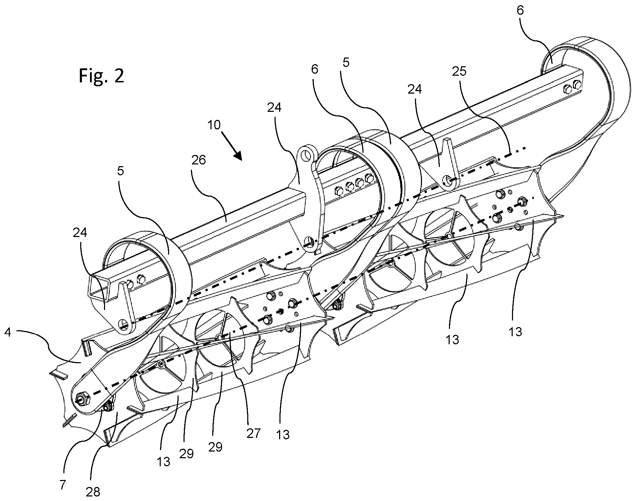

Die Einzelheiten einer Walzenanordnung sind in Figur 2 dargestellt.

An dem Querträger 26 der Stelleinrichtung 10 sind mehrere Laschen 24 nebeneinander angeordnet. Auf Höhe einer Schwenkachse 25 weisen die Laschen jeweils einen Durchbruch zur Aufnahme eines Bolzens auf, mit welchen die Stelleinrichtung 10 schwenkbar, wie in Figur 1 beschrieben, mit den Seitenflügeln 16, 17 des Rahmens 3 über die Tragarme 23 verbunden ist. Die mittlere Lasche 24 weist einen zweiten Ausbruch zur Anlenkung des Aktors 11 aus Figur 1 auf. Seitlich beabstandet am Querträger sind die verformbaren Tragarme 5 und 6 mittels Klemmmittel an ihrem oberen Ende befestigt. Die Tragarme sind als gebogene Blattfederelemente ausgebildet. In Ihrem unteren Bereich sind die Tragarme 5, 6 um 90 Grad gewendelt bzw. in ihrem Querschnitt verdreht. An diesem verdrehten Ende eines jeweiligen Tragarmes 5, 6 ist eine Drehlagerung angeordnet, welche einen Walzenkörper 4 zwischen den Tragarmen 5 und 6 aufnimmt. Der Walzenkörper 4 erstreckt sich entlang einer Mittelache 27. Endseitig des Walzenkörpers 4 ist jeweils ein Flanschsteg 28 fluchtend und senkrecht zur Mittelachse 27 des Walzenkörpers 4 angeordnet. Der Flanschsteg weist außen Aufnahmen für die mit dem Walzenkörper 4 umlaufenden Messerleisten 13 auf. Die Messerleisten 13 können stoffschlüssig oder mittels Klemm- oder Arretiervorrichtungen an den Flanschstegen 28 sowie bevorzugt vorgesehener Mittelstege 29 befestigt werden. Die Messerleisten 13 sind in gleicher Teilung beabstandet zueinander auf dem Umlaufkreis der Flansch- und Mittelstege 28, 29 angeordnet. Die Flanschstege 28 sind dabei relativ zur Mittelachse um etwa eine Messerleistenteilung bzw. deren Teilungswinkel verdreht angeordnet, um der Wendelung der Messerleisten zu entsprechen. Die Mittelstege sind entsprechend nur um einen Bruchteil der Teilungsabstände bzw. des Teilungswinkels der Messerwalzen verdreht. Der Teilungswinkel beträgt 360 Grad geteilt durch die Anzahl der Messerleisten. Die radiale Höhe des Querschnittes einer Messerleiste 13 soll deren Teilungsabstand, welcher sich aus dem Teilkreisumfang der umlaufenden Messerleisten 13 geteilt durch die Anzahl derselben ergibt, nicht überschreiten.

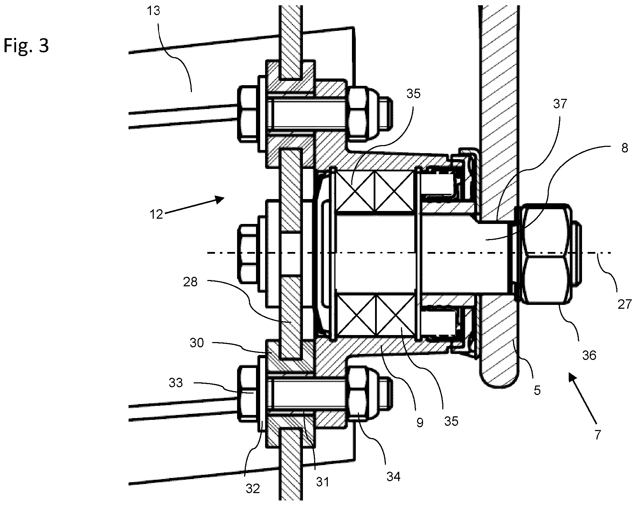

Einzelheiten der Drehlagerung und deren Anordnung am Walzenkörper 4 an den Lagerarmen 5, 6 sind in Fig. 3 dargelegt.

Am unteren Ende eines Lagerarmes 5 ist die Lagerachse 8 der Drehlagerung 7 feststehend mit dem Lagerarm 5 verbunden. Hierzu ragt ein abgesetzter Abschnitt der Lagerachse 8 durch einen Durchbruch des Lagerarms 5 hindurch. Vorzugsweise weist der abgesetzte Teil der Lagerachse 8 endseitig ein Gewinde auf, mit welchem die Lagerachse 8 unmittelbar mit dem Lagerarm 5 oder mittels einer Mutter 27 befestigt werden kann. Weiterhin weist die Lagerachse 8 Formschlusselemente 37 auf, mit denen eine Verdrehsicherung zwischen Lagerachse 8 und Lagerarm 5 hergestellt werden kann. Dies sind insbesondere von der Kreisform abweichende Konturen wie Vielecke, Anfasungen, Verzahnungen, Ellipsenkonuren, Ovale oder Passfederverbindungen, welche mit der Ausnehmung des Lagerarmes 5 korrespondieren. Dargestellt ist eine einseitige Anfasung der Lagerachse 8 als Formschlusselement 37, welche durch einen korrespondierenden Durchbruch des Lagerarmes 5 hindurch ragt.

Weiterhin weist die Drehlagerung einen Lagerkörper auf, welcher mittels Gleitelementen oder Wälzlagern 5 drehbar mit der Lagerachse verbunden ist. Auf der dem Lagerarm 5 abgewandten Seite weist der Lagerkörper 9 eine mit Durchbrüchen versehene Flanschfläche auf, welche den Lagerkörper 9 mit einem endseitigen Flanschsteg 28 des Walzenkörpers 4 unter Zuhilfenahme geeigneter Befestigungsmittel wie Bolzen 33 und Muttern 34 verbindet und die Befestigungsvorrichtung 12 bildet. Weiter bevorzugt weist die Befestigungsvorrichtung 12 weitere Formteile 30 auf, welche zwischen dem Flansch des Lagerkörpers und dem Flanschsteg angeordnet sind. Diese sind verformbar und elastisch ausgebildet und ermöglichen eine Relativbewegung zwischen Flanschsteg 28 und dem Lagerkörper 9, um Fluchtungs- oder Winkelabweichungen zwischen der Mittelachse 27 des Walzenkörpers 4 und der Lagerachse 8 auszugleichen, wie sie bei einseitigem Hinderniskontakt des Walzenkörpers 4 auftreten. Dargestellt ist der Idealfall, in welchem die Mittelachse 27 und die Mitte der Lagerachse 8 zueinander fluchten. Durch Einsatz einer zusätzlichen Buchse 31 mit definierter Länge innerhalb des Formteiles 30 kann dieses mit den Bolzen 33 und optional zusätzlichen Muttern 34 sowie weiteren Scheiben 32 auf eine bestimmte Elastizität oder Verformbarkeit eingestellt werden. Alternativ können Gleit- oder Wälzlager 35 mit einer balligen bzw. kugelförmigen Lager- oder Aufnahmefläche in den Lagerkörper 9 eingesetzt werden, welche Winkelfehler zwischen dem Lagerkörper 9 und der Lagerachse 8 kompensieren. In einer anderen Ausführungsform kann ein Teilabschnitt des Flanschsteges 28 oder des Lagerkörpers ebenfalls elastisch ausführt werden, um eine Relativbewegung zwischen Walzenkörper und Lagerachse 8 zu ermöglichen. Dies kann durch den Einsatz elastischer Federbleche oder Elastomerkörper erfolgen, welche eine Biegeverformung ermöglichen, radiale Exzentrizitätsfehler aber weitgehend vermeiden. Geringförmigere Auslenkungen des Walzenkörpers können auch bei einer starren Drehlagerung, welche keine Winkelabweichungen zwischen Lagerkörper 9 und Lagerachse 8 ermöglicht, durch die Torsionswirkung des gewendelten Querschnitts des Lagerarms 5 bzw. 6 kompensiert werden.

Es folgen drei Blätter mit Zeichnungen.

**BEZUGSZEICHENLISTE**

| | |
|---|---|
| 1 | landwirtschaftliche Maschine |
| 2 | Walzenanordnung |
| 3 | Rahmen |
| 4 | Walzenkörper |
| 5 | Lagerarm |
| 6 | Lagerarm |
| 7 | Drehlagerung |
| 8 | Lagerachse |
| 9 | Lagerkörper |
| 10 | Stelleinrichtung |
| 11 | Aktor |
| 12 | Befestigungsvorrichtung |
| 13 | Messerleiste |
| 14 | Bodenbearbeitungs- oder Verteilwerkzeuge |
| 15 | Mittelteil |
| 16 | Seitenflügel |
| 17 | Seitenflügel |
| 18 | Schneidscheiben |
| 19 | Deichsel |
| 20 | Fahrwerk |
| 21 | Aktor |
| 22 | Rückverfestigungswerkzeug |
| 23 | Tragarm |
| 24 | Lasche |
| 25 | Schwenkachse |
| 26 | Querträger |
| 27 | Mittelachse |
| 28 | Flanschsteg |
| 29 | Mittelsteg |
| 30 | Formteil |
| 31 | Buchse |
| 32 | Scheiben |
| 33 | Bolzen |
| 34 | Mutter |
| 35 | Wälzlager |
| 36 | Mutter |
| 37 | Formschlusselement |

## Patentansprüche

1. Walzenanordnung (2) für eine landwirtschaftliche Maschine (1), insbesondere für ein Bodenbearbeitungsgerät, wobei die landwirtschaftliche Maschine (1) einen Rahmen (3) aufweist, an welchem die Walzenanordnung (2) angeordnet ist, wobei die Walzenanordnung (2) einen Walzenkörper (4) sowie einen ersten und einen zweiten Lagerarm (5, 6) aufweist,
**dadurchgekennzeichnet,**
dass die jeweiligen Lagerarme (5, 6) verformbar ausgebildet sind und mit einem ersten Ende des Lagerarms (5, 6) endseitig des Walzenkörpers (4) und mit dem zweiten Ende am Rahmen (3) angeordnet sind, wobei zwischen dem jeweiligen Lagerarm (5, 6) und dem Walzenkörper (4) eine Drehlagerung (7) angeordnet ist.

2. Walzenanordnung nach Anspruch 1,
**dadurchgekennzeichnet,**
dass die Drehlagerung (7) zumindest eine Lagerachse (8) und einen Lagerkörper (9) aufweist, wobei die Lagerachse (8) dem verformbaren Lagerarm (5, 6) und der Lagerkörper (9) dem Walzenkörper (4) zugeordnet ist.

3. Walzenanordnung nach Anspruch 1 oder 2,
**dadurchgekennzeichnet,**
dass die verformbaren Lagerarme (5, 6) aus einem elastischem Federmaterial, vorzugsweise als Blatt- oder Stabfeder ausgebildet sind.

4. Walzenanordnung nach einem der vorstehenden Ansprüche,
**dadurchgekennzeichnet,**
dass der Walzenkörper (4) und/oder der Lagerkörper (9) eine Befestigungsvorrichtung (12) aufweisen, mit welcher der Walzenkörper (4) und der Lagerkörper (9) einander zugeordnet sind, wobei die Befestigungsvorrichtung (12) verformbar ausgebildet ist

5. Walzenanordnung nach einem der vorstehenden Ansprüche,
**dadurchgekennzeichnet,**
dass der erste verformbare Lagerarm (5) und der zweite verformbare Lagerarm (6) unabhängig voneinander oder relativ zueinander verformbar ausgebildet sind.

6. Walzenanordnung nach einem der vorstehenden Ansprüche,
**dadurchgekennzeichnet,**
dass zwischen dem Rahmen (3) der landwirtschaftlichen Maschine (1) und den verformbaren Lagerarmen (5, 6) eine Stelleinrichtung (10) angeordnet ist, durch welche die Position des Walzenkörpers (4) oder der verformbaren Arme (5, 6) oder deren Verformung einstellbar ausgebildet ist.

7. Walzenanordnung nach einem der vorstehenden Ansprüche,
**dadurchgekennzeichnet,**
dass der Stelleinrichtung (10) zumindest zwei, vorzugsweise vier oder mehr verformbarer Lagerarme (5, 6) jeweils paarweise mit einem Walzenkörper (4) verbunden sind.

8. Walzenanordnung nach einem der vorstehenden Ansprüche,
**dadurchgekennzeichnet,**
dass die Stelleinrichtung (10) mittels zumindest eines Aktors (11) fernverstellbar oder in der Stellwirkung regelbar ausgebildet ist.

9. Walzenanordnung nach einem der vorstehenden Ansprüche,
**dadurchgekennzeichnet,**
dass der Walzenkörper (4) als umlaufende, mit quer zur Arbeitsrichtung (A) der landwirtschaftlichen Maschine angeordneten, umlaufenden Messerleisten (13) ausgebildet ist.

10. Walzenanordnung nach einem der vorstehenden Ansprüche,
**dadurchgekennzeichnet,**
dass der Walzenanordnung (2) weitere Bodenbearbeitungs- oder Verteilwerkzeuge (14) vor- oder nachgelagert zugeordnet sind.
